# EUROPÄISCHE PATENTSCHRIFT

(11) **EP 0 811 459 B1**
(45) Veröffentlichungstag und Bekanntmachung des Hinweises auf die Patenterteilung: **19.12.2001**
(21) Anmeldenummer: 97108380.3
(22) Anmeldetag: 23.05.1997
(51) Int. Cl.: B23Q 3/155, B23Q 3/157, B23Q 5/26, B23Q 16/02, F15B 15/06

(54) **Schwenkantrieb**
Pivot drive
Entraînement pivotant

(30) Priorität: 03.06.1996 DE 19622227
(43) Veröffentlichungstag der Anmeldung: 10.12.1997
(73) Patentinhaber: Heckert Werkzeugmaschinen GmbH, 09117 Chemnitz (DE)
(72) Erfinder: Pönisch, Achim Dipl.-Ing., 09573 Erdmannsdorf (DE); Hansch, Stefan Dr.-Ing., 09227 Einsiedel (DE)
(74) Vertreter: Rumrich, Gabriele

(56) Entgegenhaltungen:
- EP-A- 0 224 714
- FR-A- 2 633 365
- US-A- 3 720 138

## Beschreibung

Die Erfindung betrifft einen Schwenkantrieb zum Schwenken eines Werkzeugspeichers mit mehreren um die Schwenkachse verteilten Werkzeugplätzen, mit zwei parallelen gestellfesten Schwenkachsen, um deren erste ein erster doppeltwirkender Arbeitszylinder und um deren zweite ein erster Schwenkhebel lagert, der sich an dem ersten doppeltwirkenden Arbeitszylinder gelenkig abstützt.

Bei einem bekannten Werkzeugspeicher für Werkzeugmaschinen (DD 78 175) besteht der Schwenkantrieb aus einem Ritzel, einer Zahnstange und einem Hydraulikkolben, wobei der die Speicherplätze aufnehmenden drehbar gelagerten Säule Anschläge zugeordnet sind. Obwohl dieser Zahnstangentrieb aufwendig und spielbehaftet ist, lassen sich nur zwei um 180 Grad versetzte Schwenkstellungen einstellen.

Ein bekannter Drehspeicher mit vier um jeweils 90 Grad versetzten Stellungen (EP 0 224 714 A 1) wird von einem gestellgebundenen Drehzylinder über einen Freilauf angetrieben. Er dreht sich je Hub um 90 Grad. Seine jeweilige Drehendlage ist durch eine Rastung definiert. Steht z. B. der Drehspeicher bei 0 Grad und wird für die nächste Bearbeitung eine Stellung von 270 Grad benötigt, muß der Drehzylinder nacheinander dreimal angesteuert werden. Das erfordert Zeit, die der Bearbeitung verlorengeht.

Der Erfindung liegt die Aufgabe zugrunde, einen Schwenkantrieb nach dem Oberbegriff des Anspruchs 1 zu schaffen, der bei einfachem Aufbau ein definiertes und schnelles Einstellen der Schwenkstellungen gestattet.

Erfindungsgemäß wird diese Aufgabe durch die Merkmale des Anspruchs 1 gelöst. Die Unteransprüche bilden die Erfindung weiter aus.

Die Erfindung wird nachstehend anhand eines Ausführungsbeispiels näher erläutert. In den zugehörigen Zeichnungen zeigen
- Fig. 1: ein Werkzeugmagazin mit zwei drehbar gelagerten Werkzeugtürmen
- Fig. 2: einen Werkzeugturm mit erfindungsgemäßem Schwenkantrieb im Schnitt
- Fig. 3a-d: den schematisch dargestellten Schwenkantrieb in vier Schwenkstellungen
- Fig. 4: eine Ansicht auf Fig. 3d in Richtung des Pfeils X
- Fig. 5: die den Schwenkvorgängen zugeordneten Geschwindigkeitsverläufe
- Fig. 6: eine weitere Ausbildung des erfindungsgemäßen Schwenkantriebs

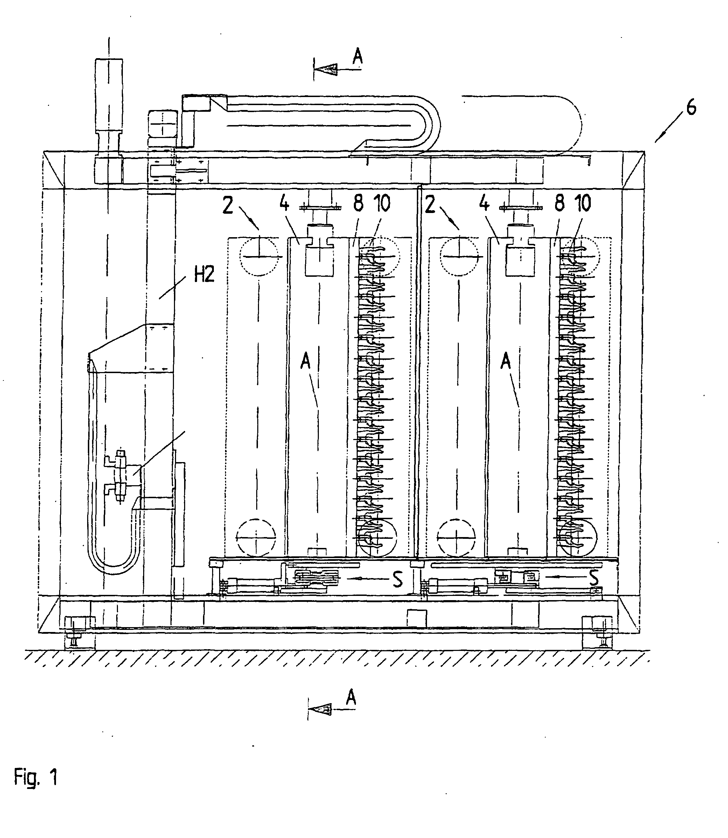

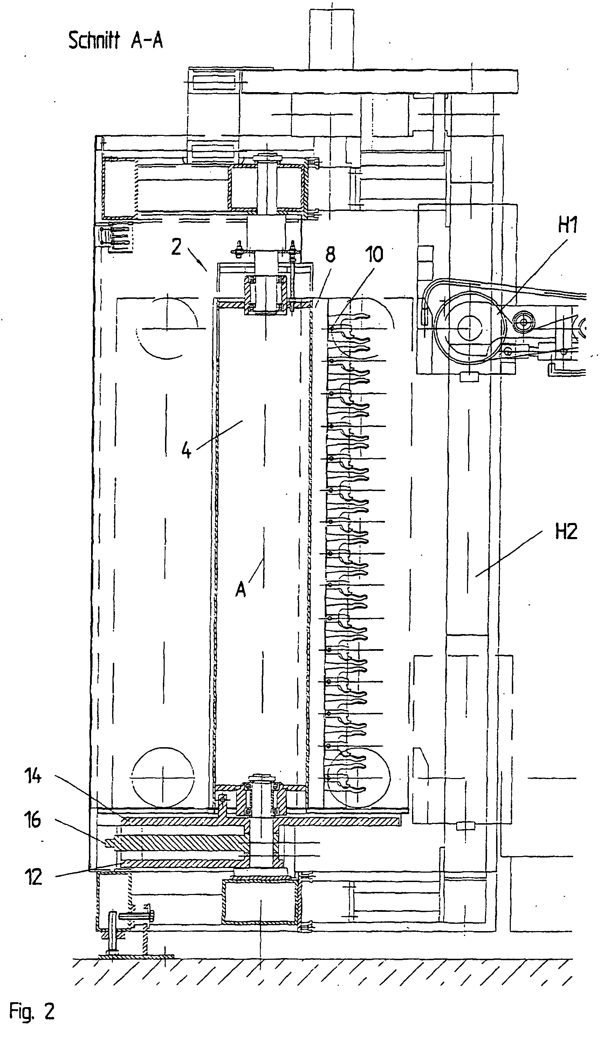

Das Werkzeugmagazin (Fig. 1, 2) besitzt zwei Werkzeugtürme 2, deren quadratische Säulen 4 im unteren und oberen Träger eines Gestellrahmens 6 lagern und an jeder ihrer vier Längsseiten eine Leiste 8 mit Werkzeugplätzen 10 aufnehmen, die mittels Schwenkantrieben S in vier um jeweils 90 Grad versetzte Schwenkstellungen schwenkbar sind. In einer nach hinten weisenden Position der über die Säule 4 hinausragenden Leisten 8 sind die Werkzeugplätze 10 von Hand oder mittels eines innerbetrieblichen Werkzeugwirtschaftssystems bestückbar. In einer nach vom weisenden Position der Leisten 8 befinden sich die Werkzeugplätze 10 im Zugriff einer Handhabungseinrichtung H, die ihrerseits die nicht dargestellte Arbeitsspindel einer Werkzeugmaschine oder eine der Arbeitsspindel zugeordnete Wechseleinrichtung bedient. Die Handhabungseinrichtung H weist einen geradführenden Knickarm H1 auf, der an einer am oberen und unteren Träger des Gestellrahmens 6 horizontal geführten Säule H2 vertikal verschiebbar ist

Der besonders flach bauende Schwenkantrieb S weist drei Schwenkhebel 12, 14, 16 und drei doppeltwirkende und beidseitig endlagengedämpfte Arbeitszylinder 18, 20, 22 auf. Die Schwenkhebel 12, 14, 16 besitzen eine gemeinsame raumfeste Schwenkachse A, der Arbeitszylinder 18 eine raumfeste Schwenkachse B. Der Schwenkhebel 16 ist T-förmig ausgebildet. Die Gelenkachse C verbindet den Schwenkhebel 12 mit den Kolben 24 und 26 der Arbeitszylinder 18 und 20, die Gelenkachse D den mit der Säule 4 koppelbaren Schwenkhebel 14 mit dem Kolben 28 des Arbeitszylinders 22, die Gelenkachse E den Schwenkhebel 16 mit dem Arbeitszylinder 20 und die Gelenkachse F den Schwenkhebel 16 mit dem Arbeitszylinder 22. Der Arbeitszylinder 18 liegt in einer ersten, die Arbeitszylinder 20, 22 liegen in einer gemeinsamen zweiten Schwenkebene. Alle Arbeitszylinder 18, 20, 22 sind identisch ausgebildet und weisen insbesondere den gleichen Hub auf. In den Schwenkstellungen schließen die Schwenkhebel 12 und 14 jeweils Winkel von 90 Grad ein, die Arbeitszylinder 20, 22 und der Schwenkhebel 16 verlaufen parallel zueinander. Für die Ansteuerung sind nicht dargestellte Steuereinrichtungen, beispielsweise Wegeventile, vorgesehen, eine erste für die Ansteuerung des Arbeitszylinders 18 und eine zweite für die parallele Ansteuerung der Arbeitszylinder 20 und 22.

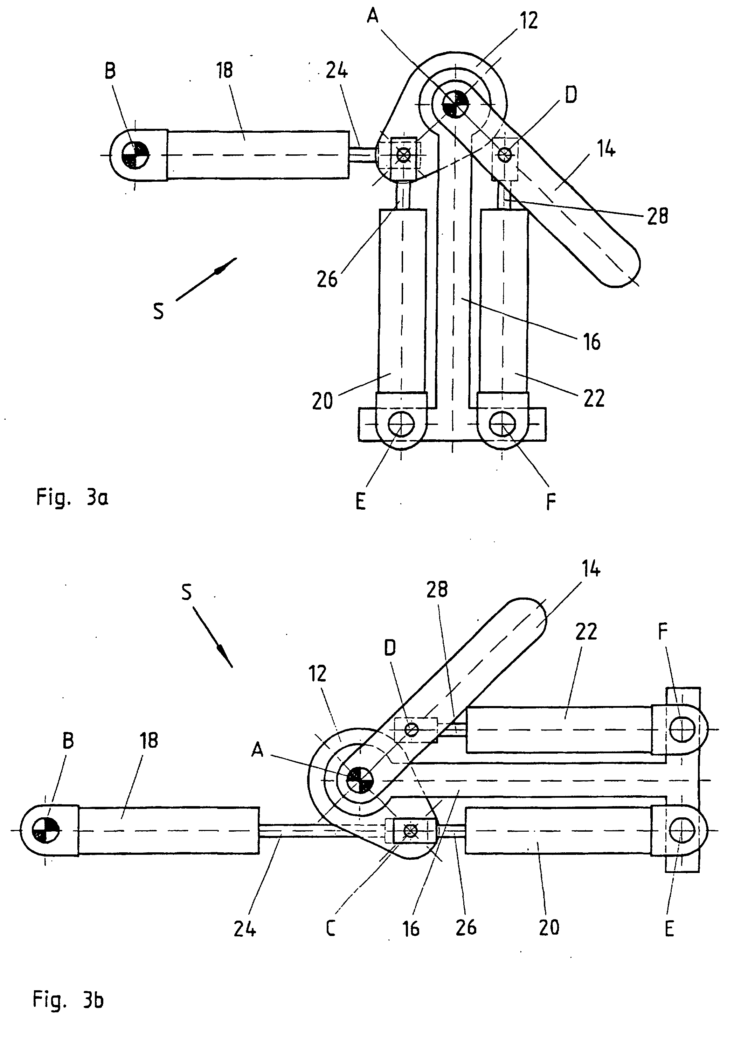

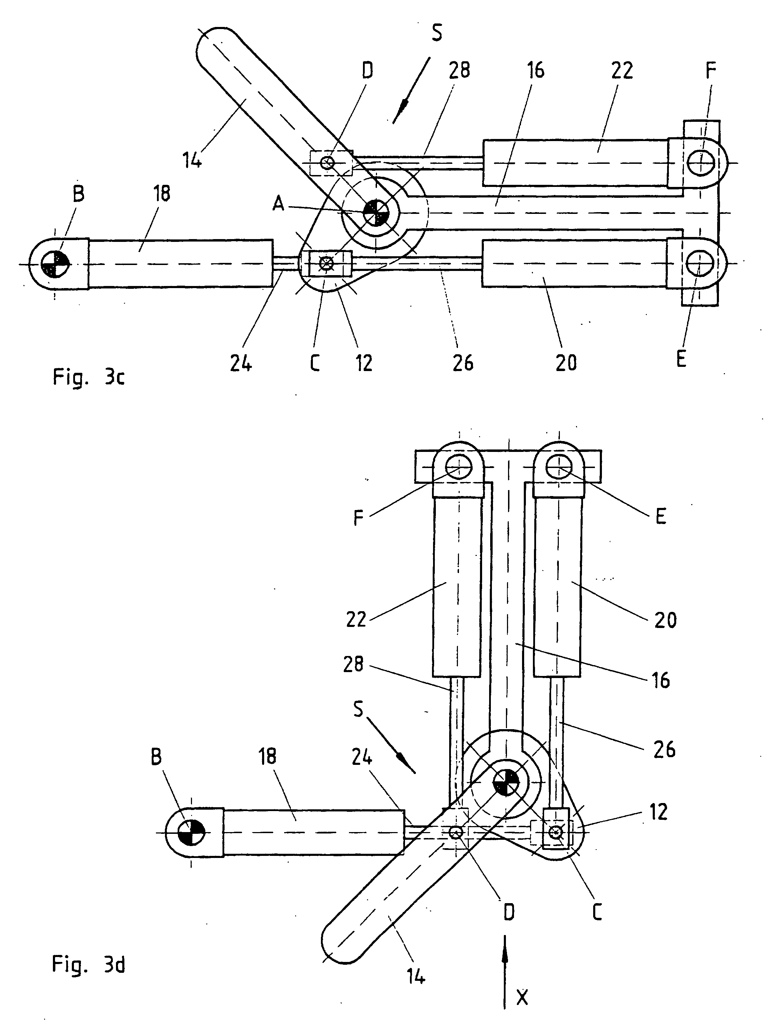

Die Wirkungsweise ist folgende: In der Ausgangsstellung gemäß Fig. 3a sind alle Kolben 24, 26, 28 eingefahren. Um die Schwenkstellung gemäß Fig. 3b zu erreichen, wird der Kolben 24 des Arbeitszylinders 18 ausgefahren, so daß sich die Schwenkhebel 12, 14, 16 unter Beibehaltung ihrer gegenseitigen Lage entgegen der Uhrzeigerrichtung um 90 Grad drehen. Um aus der Ausgangsstellung gemäß Fig. 3a heraus die Stellung gemäß Fig. 3c zu erreichen, werden gleichzeitig die Kolben 26 und 28 Arbeitszylinder 20 und 22 ausgefahren, so daß sich die Schwenkhebel 16 und 14 um 90 bzw. 180 Grad drehen. Der Gesamtdrehwinkel des Schwenkhebels 14 ergibt sich aus der Summe der Drehwinkel, um die sich die Schwenkhebel 16 und 14 gegenüber ihren jeweils benachbarten Schwenkhebeln 12 bzw. 16 drehen. Die Gesamtgeschwindigkeit des Schwenkwinkels 14 ergibt sich aus der Summe der Geschwindigkeiten, mit denen sich die Schwenkhebel 16, 14 gegenüber ihren jeweils benachbarten Schwenkhebeln 12 bzw. 16 drehen. Um schließlich aus der Ausgangsstellung gemäß Fig. 3a heraus die Stellung gemäß Fig. 3d zu erreichen, werden gleichzeitig alle Kolben 24, 26, 28 ausgefahren, so daß sich die Schwenkhebel 12, 16 und 14 um 90, 180 bzw. 270 Grad drehen. Der Gesamtschwenkwinkel und die Gesamtgeschwindigkeit des Schwenkhebels 14 ergeben sich wie oben aus der Summe der Einzelwinkel und Einzelgeschwindigkeiten. Jeder Schwenkstellung des Schwenkhebels 14 ist ein Ansteuerungsmuster für die gleichzeitige Ansteuerung der Arbeitszylinder 18, 20, 22 zugeordnet:

| | Arbeitszylinder 18 | Arbeitszylinder 20 | Arbeitszylinder 22 |
|---|---|---|---|
| 0 Grad | Kolben einfahren | Kolben einfahren | Kolben einfahren |
| 90 Grad | Kolben ausfahren | Kolben einfahren | Kolben einfahren |
| 180 Grad | Kolben einfahren | Kolben ausfahren | Kolben ausfahren |
| 270 Grad | Kolben ausfahren | Kolben ausfahren | Kolben ausfahren |

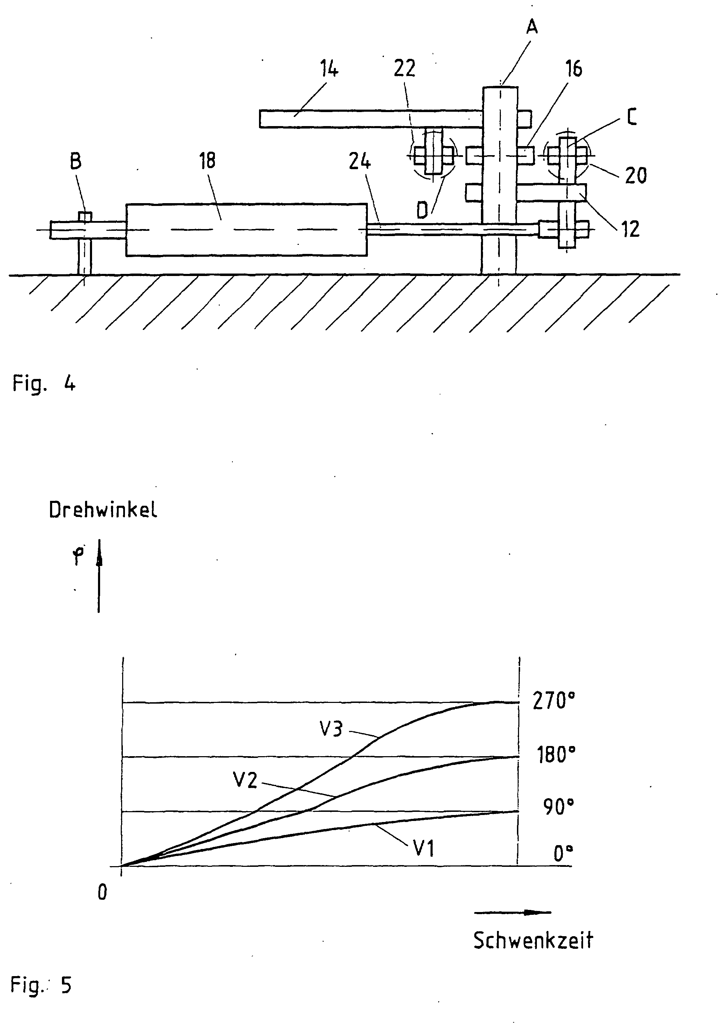

Die Arbeitszylinder 20 und 22 sind je Schwenkstellung auf gleiche Weise ansteuerbar. Sie bilden eine Gruppe, der eine gemeinsame Steuereinrichtung, d. h. ein gemeinsames Wegeventil zugeordnet ist. Alle Schwenkvorgänge, ob z. B. von 0 Grad zu 270 Grad oder von 180 Grad zu 270 Grad, laufen stetig und in der gleichen Zeit ab. Die zugehörigen Geschwindigkeitsverläufe zeigt Fig. 5.

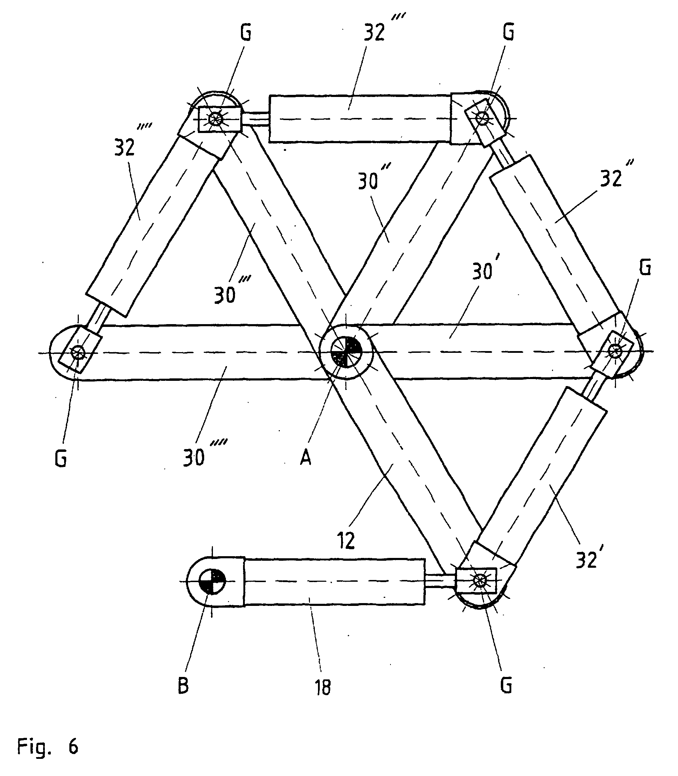

Für eine Baureihe von Werkzeugmagazinen mit jeweils unterschiedlicher Anzahl senkrechter Werkzeugreihen ist das Ausführungsbeispiel gemäß Fig. 6 vorgesehen. Bei diesem Schwenkantrieb sind alle Schwenkhebel 12, 30'-30"" und alle Arbeitszylinder 18, 32'-32"" gleich ausgebildet. Jeder Schwenkhebel besitzt nur eine einzige Gelenkachse G.
Die Abstände der Schwenkachse B und der Gelenkachsen G von der Schwenkachse A sind ebenfalls gleich. Mit diesem Schwenkantrieb lassen sich sechs Schwenkstellungen einstellen. Mögliche Ansteuerungsmuster dafür sind:

| | AZ 18 | AZ 32' | AZ 32" | AZ 32'" | AZ 32"" |
|---|---|---|---|---|---|
| 0 Grad | einfahren | einfahren | einfahren | einfahren | einfahren |
| 2. Stellung | einfahren | einfahren | einfahren | einfahren | ausfahren |
| 3. Stellung | einfahren | einfahren | einfahren | ausfahren | ausfahren |
| 4. Stellung | ausfahren | ausfahren | ausfahren | einfahren | einfahren |
| 5. Stellung | ausfahren | ausfahren | ausfahren | ausfahren | einfahren |
| 6. Stellung | ausfahren | ausfahren | ausfahren | ausfahren | ausfahren |

Die ersten drei Arbeitszylinder 18, 32' und 32" sind parallel ansteuerbar. Sie bilden eine Gruppe, der ein gemeinsames Wegeventil zugeordnet ist. Es lassen sich jedoch auch andere Ansteuerungsmuster aufstellen, bei denen die letzten drei Arbeitszylinder 32" bis 32'"' oder die jeweils zwei äußeren Arbeitszylinder parallel ansteuerbar sind.

Beiden Ausführungsbeispielen ist folgendes gemeinsam: Eine Anzahl von n Schwenkhebeln und n Arbeitszylindem bilden einen Schwenkantrieb mit n+1 Schwenkstellungen. Jeder Schwenkstellung ist ein spezifisches Ansteuerungsmuster zugeordnet, nach dem alle Arbeitszylinder gleichzeitig angesteuert werden. Die Schwenkvorgänge laufen stetig und in immer gleicher Zeit ab, unabhängig davon, aus welcher Anfangsstellung in welche Endstellung geschwenkt, d. h. welcher Schwenkwinkel zurückgelegt wird. Es sind auf einfache Weise schnelle Werkzeugwechsel möglich. Die Arbeitszylinder sind einzeln oder gruppenweise ansteuerbar. Für bis zu 4 Schwenkstellungen sind 2, für bis zu 8 Schwenkstellungen 3 und für bis zu 16 Schwenkstellungen 4 Steuereinrichtungen ausreichend. In Abhängigkeit von der Gestalt und Größe des zur Verfügung stehenden Bauraums ist einzelnen Arbeitszylindern oder Arbeitszylindergruppen je eine Schwenkebene zugeordnet. Die Verzögerungskräfte sind bei jeder Schwenkwinkelkombination gleich, da sich mit steigendem Schwenkwinkel nicht nur die Geschwindigkeiten, sondern auch die Dämpfungen und damit die Bremswege addieren.

Weitere Ausführungen der Erfindung ergeben sich bei Variation der Achslagen, der Anzahl und Gestaltung der Schwenkhebel und Arbeitszylinder und der Art der Ansteuerung. So lassen sich mit unterschiedlichen Arbeitszylinderhüben und/oder unterschiedlichen Anlenkpositionen Schwenkantriebe realisieren, bei denen sich der Gesamtschwenkwinkel nicht mehr aus jeweils gleichen, sondern aus jeweils unterschiedlichen Schwenkwinkeln zusammensetzt. Mit n Schwenkhebeln und n Arbeitszylindem sind dann mehr als n+1 Schwenkstellungen einstellbar. Einzelansteuerung ist dabei vorherrschend. Generell ist es möglich, den Arbeitszylindem und/oder Schwenkhebeln Anschläge zuzuordnen.

## Patentansprüche

1. Schwenkantrieb zum Schwenken eines Werkzeugspeichers mit mehreren um die Schwenkachse verteilten Werkzeugplätzen, mit
- zwei parallelen gestellfesten Schwenkachsen, um deren erste (B) ein erster doppeltwirkender Arbeitszylinder (18) und um deren zweite (A) ein erster Schwenkhebel (12) lagert, der sich an dem ersten doppeltwirkenden Arbeitszylinder (18) gelenkig abstützt, **gekennzeichnet dadurch, dass**
- ein oder mehrere um die zweite Schwenkachse (A) lagernde zweite Schwenkhebel (14, 16, 30) vorgesehen sind, an denen je ein zweiter doppeltwirkender Arbeitszylinder (20, 22, 32) angelenkt ist, der sich an dem jeweils benachbarten Schwenkhebel gelenkig abstützt, wobei
- den Schwenkstellungen je ein Ansteuerungsmuster für die gleichzeitige Ansteuerung der Arbeitszylinder (18, 20, 22, 32) zuordenbar ist

2. Schwenkantrieb nach Anspruch 1, **gekennzeichnet dadurch, dass** drei Schwenkhebel (12, 14, 16, 30) und drei Arbeitszylinder (18, 20, 22, 32) einen Schwenkantrieb mit vier vorzugsweise um jeweils 90 Grad versetzten Schwenkstellungen bilden.

3. Schwenkantrieb nach Anspruch 1 oder 2, **gekennzeichnet dadurch, dass** die Arbeitszylinder (18, 20, 22, 32) einzeln oder gruppenweise ansteuerbar sind.

4. Schwenkantrieb nach einem der Ansprüche von 1 bis 3, **gekennzeichnet dadurch, dass** einzelnen Arbeitszylindem (18, 32) oder Arbeitszylindergrupppen (20, 22, 32) je eine Schwenkebene zugeordnet ist.

5. Schwenkantrieb nach einem der Ansprüche von 1 bis 4, **gekennzeichnet dadurch, dass** die Gelenkachsen (G) auf einem um die zweite Schwenkachse (A) verlaufenden und die erste Schwenkachse (B) einschließenden Kreisbogen liegen.

6. Schwenkantrieb nach einem der Ansprüche von 2 bis 4, **gekennzeichnet dadurch, dass** die getrennten Gelenkachsen (E, F) des T -förmig ausgebildeten mittleren Schwenkhebels (16) auf einem um die zweite Schwenkachse (A) verlaufenden und die erste Schwenkachse (B) einschließenden äußeren Kreisbogen und die Gelenkachsen (C, D) der äußeren Schwenkhebel (12, 14) auf einem um die zweite Schwenkachse (A) verlaufenden inneren Kreisbogen liegen, wobei in den um jeweils 90 Grad versetzten Schwenkstellungen der zweite und der dritte Arbeitszylinder (20, 22) parallel zueinander verlaufen und die äußeren Schwenkhebel (12, 14) jeweils Winkel von 90 Grad einschließen.

7. Schwenkantrieb nach einem der Ansprüche von 1 bis 6, **gekennzeichnet dadurch, dass** die Arbeitszylinder (18, 20, 22, 32) beidseitig endlagengedämpft sind.

8. Schwenkantrieb nach einem der Ansprüche von 1 bis 7, **gekennzeichnet dadurch, dass** die Arbeitszylinder (18, 20, 22, 32) den gleichen Hub besitzen.

9. Schwenkantrieb nach einem der Ansprüche von 1 bis 8, **gekennzeichnet dadurch, dass** die Arbeitszylinder (18, 20, 22, 32) gleich ausgebildet sind.

## Claims

1. A pivot drive for pivoting a tool storage unit with several tool stations distributed around the pivot axle, having
- two parallel pivot axles solid with the stand, about the first axle (B) of which a first double-acting working cylinder (18) is mounted and about the second axle (A) of which a first pivot lever (12) is mounted, which lever is articulated on the first double-acting working cylinder (18), **characterised in that**
- a second, or several, pivoted lever (14, 16, 30) is provided mounted about the second pivot axle (A) on each of which a second double-acting working cylinder (20, 22, 32), which is articulated on each adjacent pivot lever, is articulated, such that
- a drive pattern can each be assigned to the pivot positions to simultaneously drive the working cylinders (18, 20, 22, 32).

2. A pivot drive as claimed in Claim 1, **characterised in that** three pivot levers (12, 14, 16, 30) and three working cylinders (16, 20, 22, 32) form a pivot drive with four pivot positions offset respectively by preferably 90°.

3. A pivot drive as claimed in Claim 1 or 2, **characterised in that** the working cylinders (18, 20, 22, 32) can be driven individually or as a group.

4. A pivot drive as claimed in any one of Claims 1 to 3, **characterised in that** a pivot plane is assigned to individual working cylinders (18, 32) or working cylinder groups (20, 22, 32).

5. A pivot drive as claimed in any one of Claims 1 to 4, **characterised in that** the articulated axles (G) rest on an arc of a circle running around the second pivot axle (A) and enclosing the first pivot axle (B).

6. A pivot drive as claimed in any one of Claims 2 to 4, **characterised in that** the separate articulated axles (E, F) of the T-shaped middle pivot lever (16) rest on an external arc of a circle running around the second pivot axle (A) and enclosing the first pivot axle (B), and the articulated axles (C, D) of the outer pivot levers (12, 14) rest on an inner arc of a circle running around the second pivot axle (A), in such a way that, in the pivot positions offset by 90° respectively, the second and third working cylinders (20, 22) run parallel to one another and the outer pivot levers (12, 14) each enclose angles of 90°.

7. A pivot drive as claimed in any one of Claims 1 to 6, **characterised in that** the working cylinders (18, 20, 22, 32) are cushioned on both sides in a final position.

8. A pivot drive as claimed in any one of Claims 1 to 7, **characterised in that** the working cylinders (18, 20, 22, 32) have the same stroke.

9. A pivot drive as claimed in any one of Claims 1 to 8, **characterised in that** the working cylinders (18, 20, 22, 32) are designed identically.

## Revendications

1. Entraînement pivotant pour le pivotement d'un magasin d'outils avec plusieurs emplacements d'outils répartis autour de l'axe de pivotement, avec deux axes de pivotement parallèles solidaires du bâti, dont le premier (B) porte un premier vérin à double action (18) et le second (A) un premier levier pivotant (12), qui s'appuie de façon articulée sur le premier vérin à double action (18), **caractérisé en ce qu'**il est prévu un ou plusieurs deuxièmes leviers pivotants (14, 16, 30) reposant autour du deuxième axe de pivotement (A), sur chacun desquels est articulé un deuxième vérin à double action (20, 22, 32) qui s'appuie sur le levier pivotant voisin, un schéma de commande pouvant être affecté à chacune des positions de pivotement pour l'actionnement simultané des vérins (18, 20, 22, 32).

2. Entraînement pivotant selon la revendication 1, **caractérisé en ce que** trois leviers pivotants (12, 14, 16, 30) et trois vérins (18, 20, 22, 32) forment un entraînement pivotant à quatre positions de pivotement décalées de 90°.

3. Entraînement pivotant selon la revendication 1 ou 2, **caractérisé en ce que** les vérins (18, 20, 22, 32) peuvent être actionnés séparément ou en groupe.

4. Entraînement pivotant selon l'une quelconque des revendications 1 à 3, **caractérisé en ce que** certains vérins (18, 32) ou groupes de vérins (20, 22, 32) sont associés à un plan de pivotement.

5. Entraînement pivotant selon l'une quelconque des revendications 1 à 4, **caractérisé en ce que** les axes d'articulation (G) se trouvent sur un arc de cercle entourant le deuxième axe de pivotement (A) et renfermant le premier axe de pivotement (B).

6. Entraînement pivotant selon l'une quelconque des revendications 2 à 4, **caractérisé en ce que** les axes d'articulation séparés (E, F) du levier pivotant central (16) en forme de T se trouvent sur un arc de cercle extérieur entourant le deuxième axe de pivotement (A) et renfermant le premier axe de pivotement (B) et les axes d'articulation (C, D) des leviers pivotants extérieurs (12, 14) se trouvent sur un arc de cercle intérieur entourant le deuxième axe de pivotement (A), les deuxième et troisième vérins (20, 22) étant parallèles l'un à l'autre dans les positions de pivotement décalées de 90° et les leviers pivotants extérieurs (12, 14) formant des angles de 90°.

7. Entraînement pivotant selon l'une quelconque des revendications 1 à 6, **caractérisé en ce que** les vérins (18, 20, 22, 32) sont amortis en fin de course des deux côtés.

8. Entraînement pivotant selon l'une quelconque des revendications 1 à 7, **caractérisé en ce que** les vérins (18, 20, 22, 32) ont la même course.

9. Entraînement pivotant selon l'une quelconque des revendications I à 8, **caractérisé en ce que** les vérins (18, 20, 22, 32) sont construits de la même manière.
